Europäisches Patentamt

(19) European Patent Office

Office européen des brevets

(11) Publication number: **0 074 203**
A2

(12) **EUROPEAN PATENT APPLICATION**

(21) Application number: 82304411.0

(22) Date of filing: 20.08.82

(51) Int. Cl.³: **A 47 J 43/06**
**B 02 C 18/30**

(30) Priority: 03.09.81 AU 569/81

(43) Date of publication of application:
16.03.83 Bulletin 83/11

(84) Designated Contracting States:
AT BE CH DE FR GB IT LI LU NL SE

(71) Applicant: BREVILLE HOLDINGS PTY. LIMITED
45, Murray Street
Pyrmont New South Wales(AU)

(72) Inventor: McClean, John William
5 Beverley Crescent
Lakemba New South Wales(AU)

(74) Representative: Gordon, Richard John Albert et al,
F.J. CLEVELAND & COMPANY 40-43, Chancery Lane
London WC2A 1JQ(GB)

(54) Food extruding device.

(57) A food extruding device consisting of a casing for attachment to a conventional food processor, the casing including a food extrusion chamber 22 containing an extruder member 27 to which food to be extruded is fed through a vertically extended open ended tube 33 for extrusion through a die 30 which defines the cross sectional shape of the extruded material. The interior of the extrusion member 22 is formed with a spiral land 32 oppositely handed to the screw extruder 27. The extrusion chamber 22 is attached to the remainder of the casing 13 by means of a bayonet joint including interengaging lugs 23 and 24. The screw extruder 27 is driven by means of a worm gear 16 that makes driving connection with the driving shaft 12 of the food processor 10; this in turn drives the pinion 19, into the bore of which a shaft 29 driving the screw extruder 27, fits. An extrusion nozzle 35 is provided for the filling of sausage casings.

./...

Croydon Printing Company Ltd

FIG.1

The present invention relates to a food extruding device and more particularly to a device constituting an attachment to a food processing apparatus that can be used for the extrusion of, for example, dough to make pasta or sausage meat to fill sausage skins.

The object of the invention is to provide a food extruding device intended principally for the extrusion of dough to form pasta but which may be adapted for other purposes. It is proposed that the device be constucted in such a manner that it constitutes an adjunct to a food processing machine of the kind consisting of a base containing a driving motor, an appliance drive shaft projecting vertically upward through the base for the attachment of appliances thereto, means for controlling the operation of the driving motor and means on the upper part of the base adapted for the attachment of a container in which food is processed by an appliance driven through the driving shaft.

The present invention consists in a food extruding device comprising a casing having means thereon for direct and easy attachment to the top of the base of a food processing machine of the kind set forth above, said casing defining a passage extending in a substantially vertical direction said passage having at its upper end an opening for the insertion therein of a food stuff to be extruded, an extrusion chamber at the lower end of said passage having therein a rotatable extruder member arranged on a horizontally extending driving shaft, an outlet from said extrusion chamber through which extruded material passes at one side of said base, means in said aperture for defining the cross-sectional shape of the extruded material, and gear means within said casing providing a driving connection between said appliance drive shaft and the driving shaft of said extruder member.

In order that the nature of the invention may be better understood and put into practice a preferred form thereof is hereinafter described by way of example with reference to the accompanying drawings in which:-

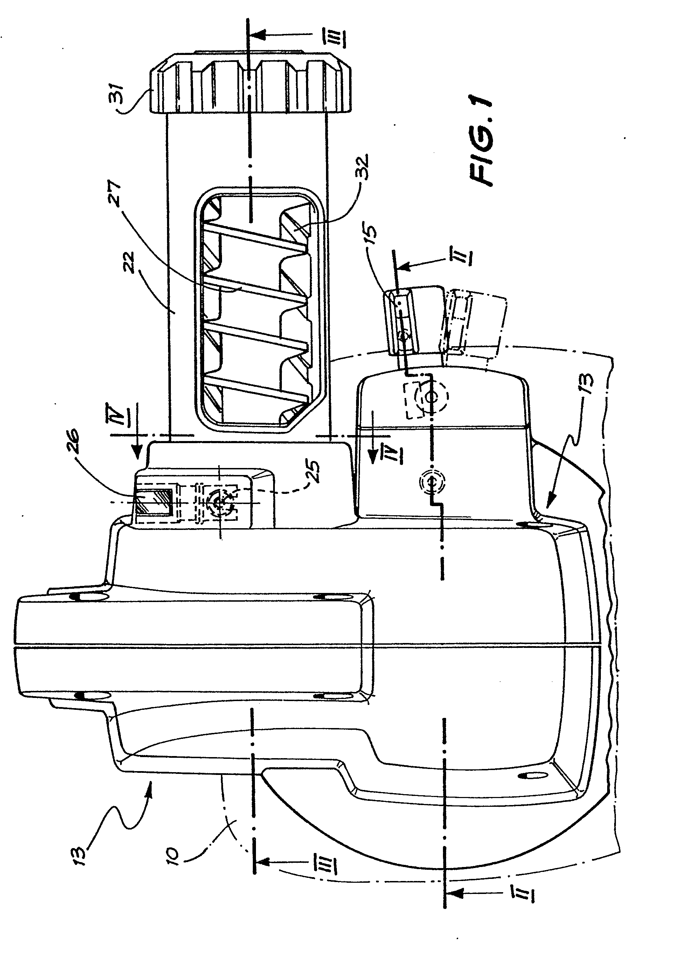

Fig. 1 is a plan view of a device according to the invention mounted on a food processor,

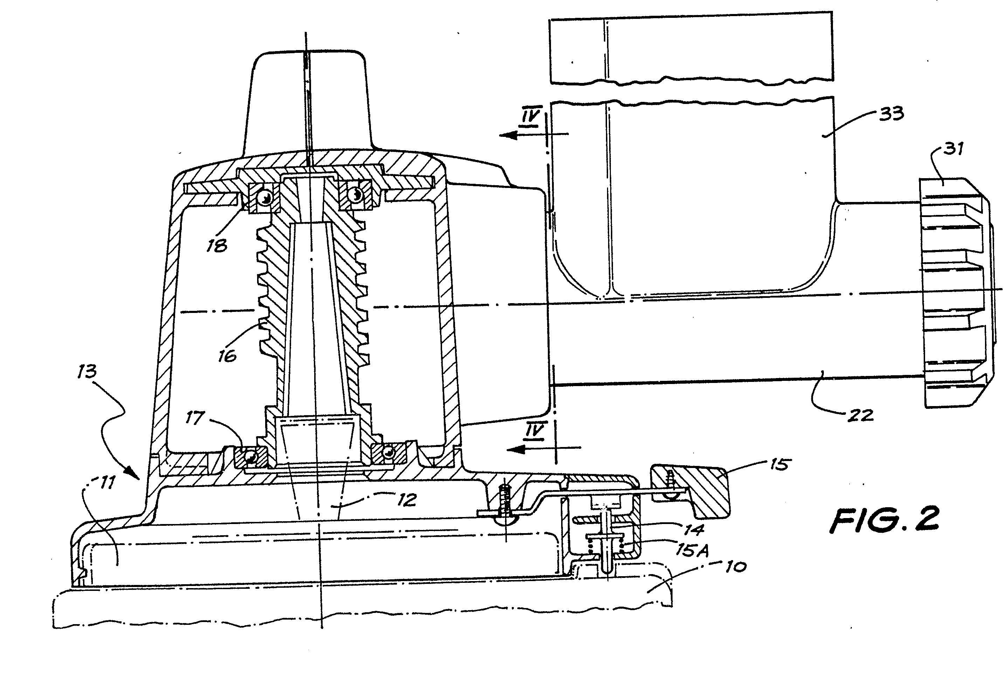

Fig. 2 is a sectional elevation on line II-II of Fig. 1,

Fig. 3 is a sectional elevation on line III-III of Fig. 1,

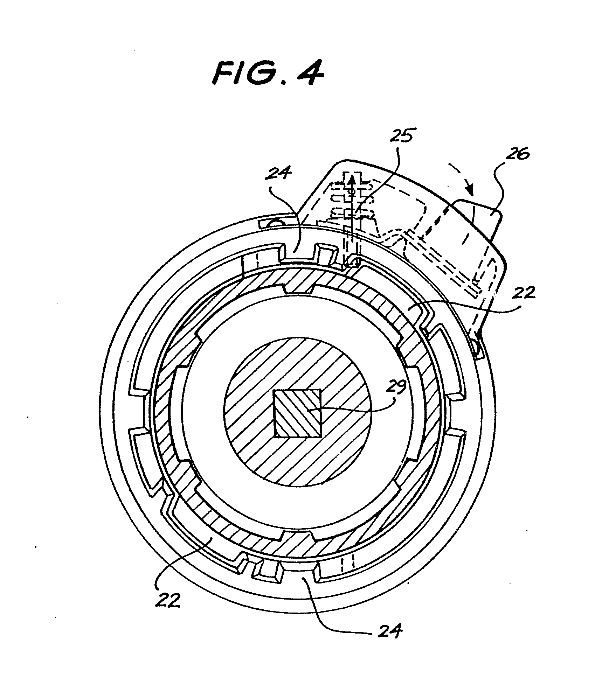

Fig. 4 is a section on line IV-IV of Fig. 1, and

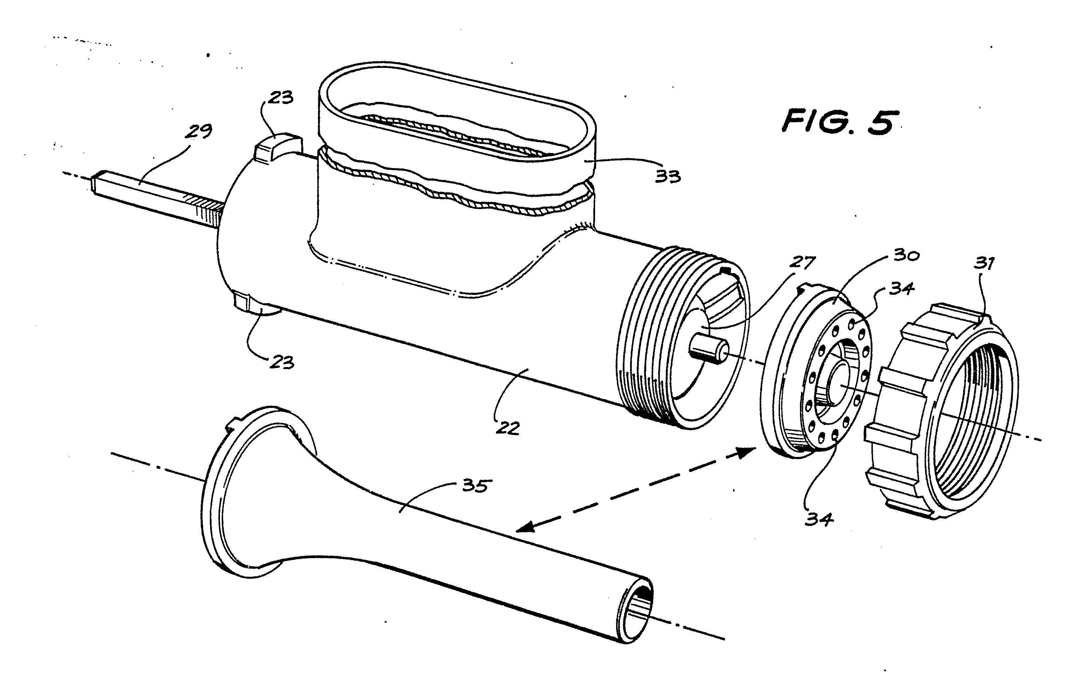

Fig. 5 is a perspective view of the extrusion chamber showing an extruding die about to be attached thereto and an extrusion nozzle that can be attached in place of the die for the extrusion of sausage meat.

In the drawings the upper part of the base of a multi purpose food processor is indicated at 10. On topof the base is a portion 11 of a reduced diameter to which the conventional food processing container is normally affixed by means of a bayonet type connection. Projecting vertically upward from the base 10 is a driving shaft 12 connected at its lower end with a driving motor (not shown), the operation of the motor being controlled by a switch (not shown) which is actuated in normal use from the container through a hole in the top of the base, the container having to be in correct relation with the base before the switch can be operated. The parts just described are standard features of construction of food processors of the kind referred to.

The extruding device of the present invention consists in a casing moulded from plastic material indicated generally at 13. The lower portion of the casing 13 is constructed to fit over the part 11 of the base and to be connected to it by means of a bayonet type connection in exactly the same manner as the normal food processing container. The casing is attached to the base by placing it over the part 11 and then rotating it to lock it to the base. It is removed by the reverse procedure. When correctly positioned on the base the pin 14 which is spring loaded in an upward direction by the spring 15 is brought over a hole (not shown) in the base in such a manner that if the pin 14 is depressed it actuates the switch controlling the motor in the base and causes the driving shaft 12 to rotate. The pin 14 is operated manually by means of the lever 15 which is moved by means of the operator's finger through a small arc.

Within the upper part of the casing 13 is a vertically extending worm gear 16 supported in ball bearings 17 and 18. The interior of the worm gear 16 is shaped to make driving connection with the driving shaft 12 when the casing is fixed to the base. The worm gear 16 drives a pinion 19 mounted for rotation about a horizontal axis and supported in plain bearings 21 in a suitable mounting formed integrally with the casing 13.

One side of the casing 13 is extended to constitute an extrusion chamber 22. The extrusion chamber 22 is attached to the remainder of the casing 13 by means of a bayonet type joint, the extrusion chamber being provided with radially extending lugs 23 which, when the extrusion chamber is offered up to the casing 13 pass through circumferentially spaced slots between projections 24. Partial rotation of the extrusion chamber locks it in the position shown in the drawings, it being held in that position by a manually releasable spring catch 25 operated by the projecting button 26.

The extrusion chamber 22 contains within it an extruder screw 27 which is mounted on a shaft 28 provided with a square section portion 29 fitting into a similarly shaped bore in the pinion 19. Rotation of the pinion thus rotates the extruder screw 27. The inner end of the extruder screw 27 is supported on a thrust bearing 29 and its outer end is supported in a central hole in the extrusion die 30 which is secured by a screw cap 31 to the end of the extrusion chamber 22. On the inner surface of the extrusion chamber 22 is formed a spiral land 32 which is oppositely handed in relation to the screw extruder 27. A tube 33 extends upwardly from the extruder member 22 and defines a passage through which material to be extruded can be fed to the screw extruder 27.

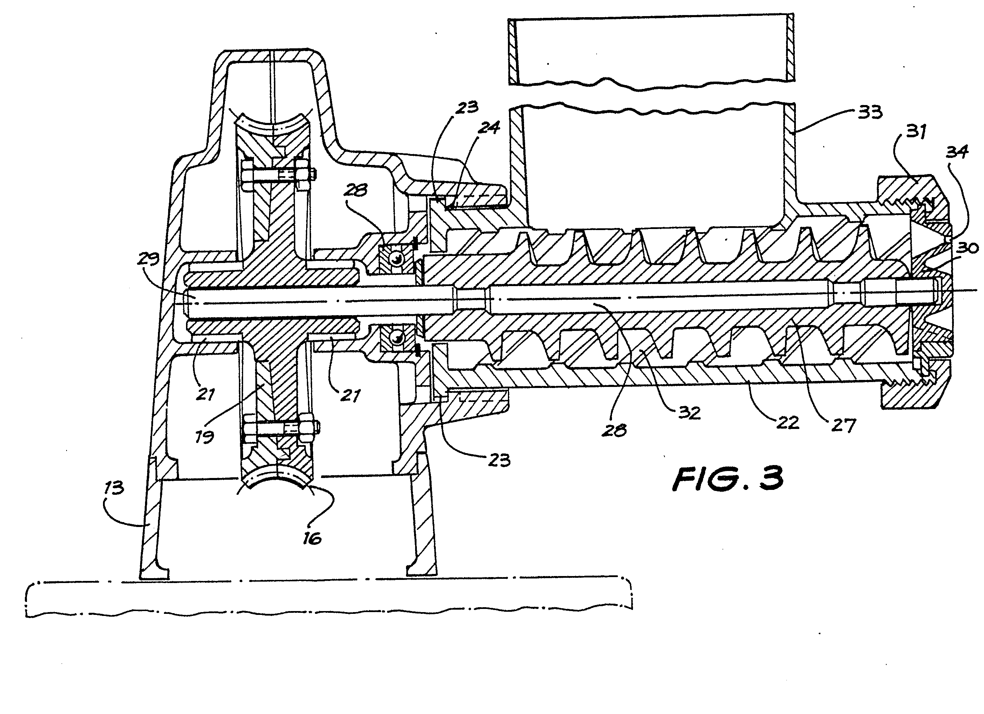

As a first step to making pasta a suitable mixture of flour and water of the right consistency is prepared in the normal container of the food processor. Once this has been done the container is removed and the food extruding device is attached to the base of the food processor in the manner described above. The prepared pasta dough is then fed in through the tube 33 to the screw extruder 27 which forces the material through apertures 34 in the die 30. As can be seen from Fig. 3 the die 30 is readily removable by unscrewing the cap 31 and a variety of different die are provided to enable different forms of pasta to be extruded.

The device may also be used for filling sausage skins in which case the die 30 is replaced with the filler nozzle 35 onto which a length of sausage skin is fed and minced sausage meat is fed into the tube 33 and extruded into the skin through the extruder tube 25.

Almost all parts of the device described above are moulded from plastic material with the exception of ball bearings and the shaft of the screw extruder. This enables the construction to be very light and easy to clean. A particular feature in connection with cleanliness is the fact that the extrusion chamber together with the screw extruder and the parts associated with it may be readily removed from the remainder of the casing for cleaning purposes. All the parts associated with the extrusion chamber can be disassembled, washed, dried and replaced quickly and easily. The remainder of the device can be cleaned adequately by simply wiping it over as all material to be extruded will be confined to the interior of the extrusion chamber and in particular the outer part thereof.

- 6 -

A particular feature of the construction described is the provision of the land 32 inside the extrusion chamber. This fulfills a double function. Without it it has been impossible to satisfactorily extrude minced meat from the device and it thus enables this to be done. In addition it helps absorb back pressure generated in the pasta mix by the presence of the relatively small orifices in the die and this tends to promote smoother operation of the device during extrusion.

CLAIMS

1. A food extruding device comprising a casing having means thereon for direct and easy attachment to the top of the base of a food processing machine of the kind hereinbefore set forth, said casing defining a passage extending in a substantially vertical direction said passage having at its upper end an opening for the insertion therein of a food stuff to be extruded, an extrusion chamber at the lower end of said passage having therein a rotatable extruder member arranged on a horizontally extending driving shaft, an outlet from said extrusion chamber through which extruded material passes at one side of said base, means in said aperture for defining the cross-sectional shape of the extruded material, and gear means within said casing providing a driving connection between said appliance drive shaft and the driving shaft of said extruder member.

2. A food extruding device as claimed in claim 1 wherein the part of the casing including the extrusion chamber is removably attached to the remainder of the casing whereby the extrusion chamber and the rotatable extruder member are readily removable for cleaning.

3. A food extruding device as claimed in claim 1 or claim 2 wherein the extruder member is a screw extruder and the interior of the extrusion chamber is formed with a spiral land oppositely handed to the screw extruder.

4. A food extruding device as claimed in claim 1 wherein the casing includes a vertically extending worm gear constructed and arranged to make driving connection with the driving shaft of a food processor to which the device is attached, the worm gear driving a pinion supported to rotate about a horizontal axis, the exruder member being driven directly from said pinion.

FIG.1

0074203

FIG.2

FIG. 3

FIG. 4

FIG. 5